# EUROPEAN PATENT APPLICATION

(11) **EP 3 978 303 A1**
(43) Date of publication of application: **06.04.2022**
(21) Application number: 21199731.7
(22) Date of filing: 29.09.2021
(51) Int. Cl.: B60L 53/14, B60L 53/16, B60L 53/20

(54) **VEHICLE, CONVERSION ADAPTER, AND CHARGING SYSTEM**

(30) Priority: 30.09.2020 JP 2020165033
(71) Applicant: Panasonic Intellectual Property Management Co., Ltd., Osaka-shi, Osaka 540-6207 (JP)
(72) Inventor: CHIZUWA, Shuhei, Osaka, 571-8501 (JP)
(74) Representative: Eisenführ Speiser

(57) **Abstract**

A vehicle according to the present disclosure includes a battery, a traveling motor, and an on-vehicle charger. The traveling motor is driven by power from the battery. The on-vehicle charger has a safety component including an opening and closing circuit and a control circuit. The opening and closing circuit opens and closes an electric circuit between a power supply source and the battery. The control circuit cuts off the electric circuit by the opening and closing circuit when electric leakage is detected by monitoring a current flowing through the electric circuit. The on-vehicle charger charges the battery using power supplied from the power supply source via a charging cable.

## Description

### FIELD

The present disclosure relates to a vehicle, a conversion adapter, and a charging system.

### BACKGROUND

Usually used facilities for charging an on-vehicle battery mounted on a vehicle such as an electric propulsion vehicle include a household charging facility using a household power supply being an end of an electric power network, and a public charging facility which is provided in an urban area, under a road surface, or the like and is intended for use by an unspecified large number of people. Under such circumstances, there is a demand for charging an on-vehicle battery using a household charging facility from the viewpoint of user convenience.

However, the household charging facility using a power outlet of a single-phase 100 V or 200 V commercial power source installed in an ordinary home, an office, or the like does not have an electric leakage detection function, and thus is problematic in safety such as the risk of electric shock. On the other hand, adopting a charging cable with an electric leakage detection function requires the cost and man-hours for its development.

The present disclosure provides a vehicle, a conversion adapter, and a charging system that can improve safety in charging an on-vehicle battery.

### SUMMARY

A vehicle according to the present disclosure includes a battery, a traveling motor, and an on-vehicle charger. The traveling motor is driven by power from the battery. The on-vehicle charger has a safety component including an opening and closing circuit and a control circuit. The opening and closing circuit opens and closes an electric circuit between a power supply source and the battery. The control circuit cuts off the electric circuit by the opening and closing circuit when electric leakage is detected by monitoring a current flowing through the electric circuit. The on-vehicle charger charges the battery using power supplied from the power supply source via a charging cable.

According to the vehicle, the conversion adapter, and the charging system according to the present disclosure, safety in charging the on-vehicle battery can be improved.

### BRIEF DESCRIPTION OF THE DRAWINGS

FIG. 1 is a diagram illustrating an example of a configuration of a charging system according to an embodiment;
FIG. 2 is a diagram illustrating an example of a configuration of an on-vehicle charger according to the embodiment;
FIG. 3 is a diagram for explaining a case where a control unit is mounted on a charging cable, unlike the charging system according to the embodiment;
FIG. 4 is a diagram for explaining components that can be reduced by the charging system according to the embodiment;
FIG. 5 is a diagram illustrating an example of a configuration of a conversion adapter according to the embodiment;
FIG. 6 is a diagram for explaining a case where a dedicated charging cable is used, unlike the charging system according to the embodiment; and
FIG. 7 is a diagram illustrating another example of the configuration of the conversion adapter according to the embodiment.

### DETAILED DESCRIPTION

Embodiments of a vehicle, a conversion adapter, and a charging system according to the present disclosure will be described below with reference to the drawings.

### First Embodiment

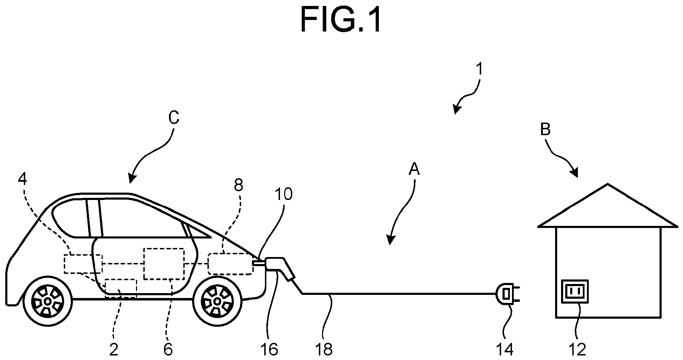

FIG. 1 is a diagram illustrating an example of a configuration of a charging system 1 according to an embodiment. The charging system 1 includes a charging cable A, a power supply source B and a vehicle C as illustrated in FIG. 1. FIG. 1 illustrates a state in which a battery 6 of the vehicle C is charged by power from the power supply source B using the charging cable A according to the embodiment. Note that, in the following description, the side from which power is supplied and the side toward which power is supplied may be referred to as an upstream side and a downstream side, respectively.

The charging system 1 can charge the battery 6 of the vehicle C by any of charging control methods of Mode 1, Mode 2, and Mode 3 as specified by the International Standard IEC 61851-1. The charging by the charging control methods of Mode 1, Mode 2, and Mode 3 is hereinafter described as Mode 1 charging, Mode 2 charging, and Mode 3 charging, respectively. Here Mode 1 charging is charging performed in a state in which neither the charging cable A nor the power supply source B has a control unit for performing a control function such as checking connection between the power supply source B and the vehicle C via the charging cable A, determining charging current, starting charging, detecting electric leakage during charging, and ending charging. On the other hand, Mode 2 charging is charging using the charging cable A on which the control unit is mounted. Mode 3 charging is charging using the power supply source B on which the control unit is mounted.

Note that the embodiment describes the charging system 1 by exemplifying the case where Mode 1 charging is performed.

The charging cable A is a cable connecting the power supply source B and the vehicle C when the battery 6 mounted on the vehicle C is charged using power from the power supply source B. The charging cable A is a charging cable for Mode 1 charging. The charging cable A has a power plug 14, a charging coupler 16, and a connection cable 18 as illustrated in FIG. 1. The power plug 14 is detachably connected to a power outlet 12 of the power supply source B. The charging coupler 16 is detachably connected to an on-vehicle charger 8 of the vehicle C via a connector 10. The connection cable 18 connects the power plug 14 and the charging coupler 16.

The power supply source B is a single-phase 100 V or 200 V commercial power source installed in an ordinary home, an office, or the like. In other words, the power supply source B is a power supply source for Mode 1 charging. In other words, the power supply source B does not have a control unit which implements a control function such as checking connection between the power supply source B and the vehicle C via the charging cable A, determining charging current, starting charging, detecting electric leakage during charging, and ending charging. The power supply source B has the power outlet 12. The power outlet 12 has a waterproof structure for preventing short-circuiting of electrodes by rainwater or the like, and is disposed on an outer wall of a house, or the like, for example.

Note that the power supply source B may be a public charging facility, such as a charging station for Mode 1 charging, which is provided in an urban area, under a road surface, or the like and is intended for use by an unspecified large number of people.

The vehicle C is an example of a moving body traveling using power generated by a motor. The vehicle C according to the embodiment is, for example, an electric vehicle (EV) or a plug-in hybrid electric vehicle (PHEV, PHV).

The vehicle C includes a traveling motor 2, an inverter 4, the battery 6, and the on-vehicle charger 8 as illustrated in FIG. 1. The traveling motor 2 is a motor driven by power from the battery 6. The inverter 4 converts the power from the battery 6 into a predetermined AC power to supply the traveling motor 2. As the battery 6, for example, a lithium ion battery can be suitably used.

The on-vehicle charger 8 has a power conversion unit which is connected to the connector 10, converts AC power supplied from the power supply source B via the connector 10 and the charging cable A into DC power of a predetermined voltage to supply the battery 6 and/or the traveling motor 2. Further, the on-vehicle charger 8 has a control unit for implementing a control function and a safety function such as checking connection between the power supply source B and the vehicle C via the charging cable A, determining charging current, starting charging, detecting electric leakage during charging, and ending charging.

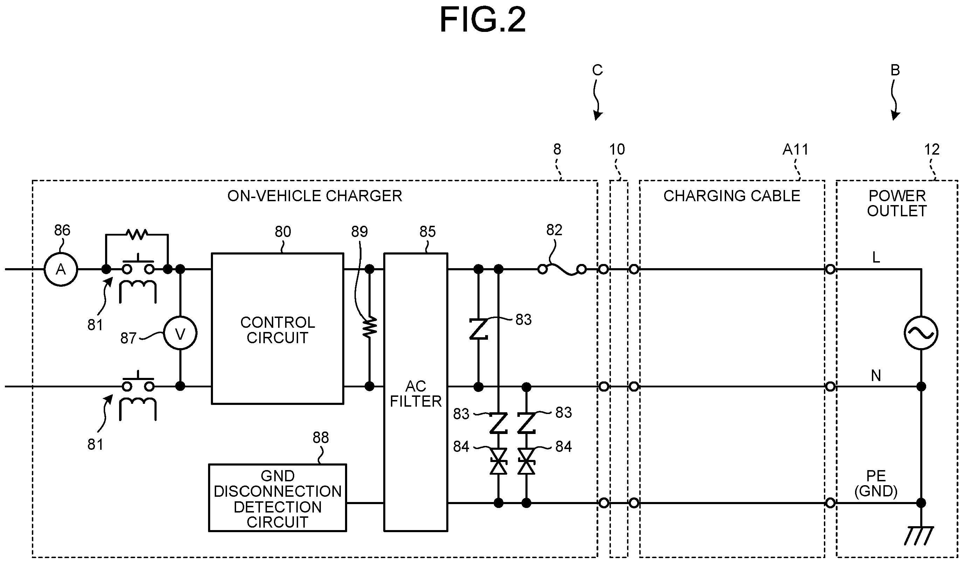

FIG. 2 is a diagram illustrating an example of the configuration of the on-vehicle charger 8 according to the embodiment. FIG. 2 illustrates an example of a control unit of the on-vehicle charger 8, and omits a power conversion unit provided in a subsequent stage of the control unit. As illustrated in FIG. 2, the power outlet 12 of the power supply source B and a charging cable A1 are connected by a power supply line L on a non-ground side, a power supply line N on a ground side, and a ground line PE. Similarly, the charging cable A1 and the on-vehicle charger 8 are connected by the power supply line L on the non-ground side, the power supply line N on the ground side, and the ground line PE.

The on-vehicle charger 8 has a control circuit 80, an AC relay 81, an AC fuse 82, a varistor 83, an arrester 84, an AC filter 85, an AC current sensor 86, an AC voltage sensor 87, a GND disconnection detection circuit 88, and a discharge resistor 89.

The AC fuse 82 is a fuse for AC power, and is provided on the upstream side of the power supply line L on the non-ground side. The varistor 83 is a semiconductor element having a resistance value variable according to a voltage. The arrester 84 discharges the surge voltage and absorbs the energy of the lightning surge. A set of the varistor 83 and the arrester 84 is provided between the upstream side of the power supply line N on the ground side and the upstream side of the ground line PE. Further, on the downstream side thereof, another set of the varistor 83 and the arrester 84 is provided between the downstream side of the AC fuse 82 of the power supply line L and the ground line PE. Further, on the downstream side thereof, the varistor 83 is provided between the power supply line L and the power supply line N. Further, on the downstream side of these, the discharge resistor 89 for discharging the electric charge stored in, for example, a not illustrated capacitor inside the on-vehicle charger 8 is provided between the power supply line L and the power supply line N. Further, on the downstream side of the ground line PE, the GND disconnection detection circuit 88 for monitoring ground by the ground line PE is provided. Note that the GND disconnection detection circuit 88 may be included in the control circuit 80. Here the AC fuse 82, the varistor 83, the arrester 84, the GND disconnection detection circuit 88, and the discharge resistor 89 are an example of a safety component.

The AC filter 85 is a filter that reduces electromagnetic noise directed upstream from the control circuit 80, for example. The AC filter 85 is provided between the varistor 83 and the discharge resistor 89 provided between the power supply line L and the power supply line N. The AC filter 85 is an example of a noise countermeasure component. Note tha the on-vehicle charger 8 may have a noise countermeasure component other than the AC filter 85 that reduces electromagnetic noise from the control circuit 80t, not limited to the AC filter 85.

The control circuit 80 is provided downstream of the AC filter 85 and between the power supply line L and the power supply line N. The control circuit 80 detects electric leakage based on the outputs of the AC current sensor 86, the AC voltage sensor 87, and the GND disconnection detection circuit 88, for example, and when the electric leakage is detected, controls the AC relay 81 to cut off the electric circuit between the charging coupler 16 and the battery 6.

The AC voltage sensor 87 is provided downstream of the control circuit 80 and between the power supply line L and the power supply line N, and measures the voltage value of AC power. The AC relay 81 is controlled by the control circuit 80, and is an opening and closing circuit for opening and closing the electric circuit between the charging coupler 16 and the battery 6. The AC relay 81 is provided downstream of the AC voltage sensor 87 and on each of the power supply line L and the power supply line N. Further, the AC current sensor 86 for measuring the current value of AC power is provided downstream of the AC relay 81 of the power supply line L.

In the charging system 1, when the power supply source B and the vehicle C are connected by the charging cable A11 (charging cable A), power from the power supply source B is supplied to the vehicle C via the charging cable A11, and charging of the battery 6 is started. Further, the on-vehicle charger 8 of the vehicle C monitors the current flowing through an electric circuit to detect electric leakage, and when the electric leakage is detected, cuts off the electric circuit by the AC relay 81 to stop the power supply from the power supply source B to the vehicle C. Here the control circuit 80, the AC relay 81, the AC current sensor 86, and the AC voltage sensor 87 related to the electric leakage detection are also an example of a safety component.

As just described, in the charging system 1 according to the embodiment, the on-vehicle charger 8 has a control unit having the safety component and the noise countermeasure component as in a charging cable A2 for Mode 2 charging or a power supply source B for Mode 3 charging. In other words, in the charging system 1 according to the embodiment, the on-vehicle charger 8 has the same function as the control unit mounted on the charging cable A2 for Mode 2 charging or the power supply source B for Mode 3 charging.

Therefore, according to the vehicle C on which the on-vehicle charger 8 according to the embodiment is mounted, the control function and the safety function can be implemented as in the case of Mode 2 charging and Mode 3 charging, when charging the battery 6 using the power supplied from the power supply source B for Mode 1 charging via the charging cable A11 for Mode 1 charging. In other words, the technique of the embodiment can improve the safety in Mode 1 charging of the on-vehicle battery 6.

Further, since the charging cable A2 for Mode 2 charging is not used, the cost and man-hours for developing the charging cable A2 for Mode 2 charging can be reduced.

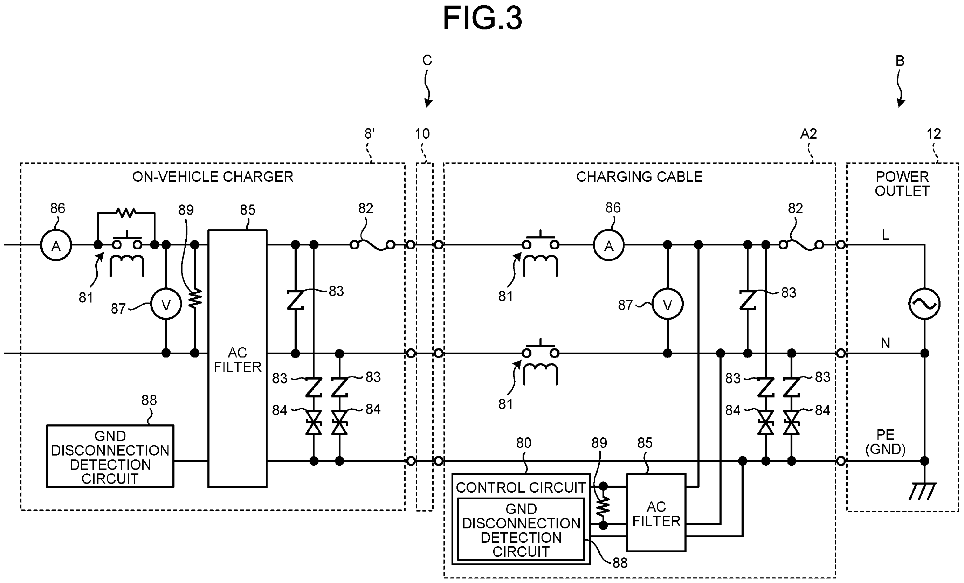

FIG. 3 is a diagram for explaining a case where a control unit is mounted on the charging cable A2, unlike the charging system 1 according to the embodiment. Unlike the on-vehicle charger 8 according to the embodiment, an on-vehicle charger 8' in FIG. 3 does not have a control unit.

On the other hand, the charging cable A2 for Mode 2 charging may be used for the on-vehicle charger 8' on which a control unit is not mounted, and thus needs to obtain an authentication for the standard of Mode 2 charging by the cable alone. Therefore, the charging cable A2 for Mode 2 charging needs to have a safety component and a noise countermeasure component as illustrated in FIG. 3.

On the other hand, as described above, in the charging system 1 according to the embodiment, since the on-vehicle charger 8 is provided with a control unit such as a safety component and a noise countermeasure component, the charging cable A11 does not need to have a control unit. In other words, the charging cable A11 according to the embodiment is not provided with a safety component with respect to power supply from the charging cable A11 to the on-vehicle charger 8. As an example, the charging cable A11 is not provided with an opening and closing circuit for opening and closing an electric circuit between a commercial power source serving as a power supply source for Mode 1 charging and the on-vehicle charger 8. Further, the charging cable A11 is not provided with a noise countermeasure component for reducing electromagnetic noise from the control circuit 80 to the power supply source B. Therefore, sharing the safety component and the noise countermeasure component which may have overlapped usually, can be shared, and a part of the safety component and noise countermeasure component can be reduced.

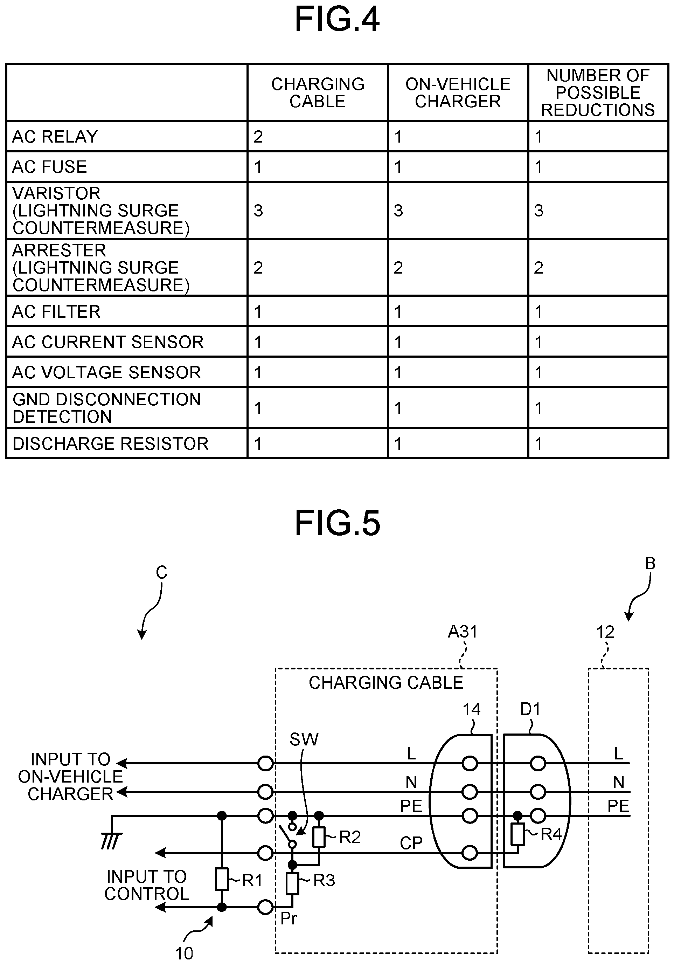

FIG. 4 is a diagram for explaining components that can be reduced by the charging system 1 according to the embodiment. As illustrated in FIGS. 2 to 4, according to the charging system 1 according to the embodiment, one AC relay 81 and one AC fuse 82 provided on the power supply line L can be reduced. Further, three varistors 83, two arresters 84, one AC filter 85, one AC current sensor 86, one AC voltage sensor 87, one GND disconnection detection circuit 88, and one discharge resistor 89 mounted on the charging cable A2 for Mode 2 charging can be reduced.

Thus, the cost for the charging system 1 can be reduced. Further, the reduction of the number of components also enables to reduce the size of a substrate on which the components are mounted. Therefore, the reduction of the size and weight of the charging cable A11 can also improve the mountability of the charging cable A to the vehicle C.

### Second Embodiment

The charging system 1 according to a second embodiment will be described below. Differences from the first embodiment will be mainly described below, and descriptions of overlapping parts will be omitted as appropriate.

The present embodiment illustrates, as an example, the charging system 1 using a charging cable A31 for Mode 3 charging as the charging cable A.

FIG. 5 is a diagram illustrating an example of a configuration of a conversion adapter D1 according to the embodiment. The charging system 1 further includes the conversion adapter D1.

The one end of the conversion adapter D1 is formed to be detachably attached to the power outlet 12 of the power supply source B for Mode 1 charging. Further, as illustrated in FIG. 5, one end of the conversion adapter D1 is connected to the power outlet 12 of the power supply source B for Mode 1 charging by the power supply line L on the non-ground side, the power supply line N on the ground side, and the ground line PE.

The conversion adapter D1 has a resistor R4. The resistor R4 is connected to the ground line PE. The resistor R4 is an example of a first resistor.

The other end of the conversion adapter D1 is formed to be detachably attached to the charging cable A31. Further, the other end of the conversion adapter D1 is connected to the charging cable A31 by the power supply line L on the non-ground side, the power supply line N on the ground side, the ground line PE, and a first control line CP. Here the first control line CP is connected to the ground line PE via the resistor R4.

Note that, between the conversion adapter D1 and the charging cable A31, the first control line CP is assumed to be a male type at the conversion adapter D1 and a female type at the charging cable A31.

The opposite side of the charging cable A31 to the conversion adapter D1 is connected to the connector 10 by the power supply line L on the non-ground side, the power supply line N on the ground side, the ground line PE, the first control line CP, and a second control line Pr. The charging cable A31 has a resistor R2, a resistor R3 and a switch SW. The resistor R2 is connected to the ground line PE. The switch SW is connected to the ground line PE on the vehicle C side of the resistor R2. The resistor R3 is connected to the ground line PE via each of the resistor R2 and the switch SW. The second control line Pr is connected to each of the resistor R2 and the switch SW via the resistor R3. Here the resistor R2 is an example of a fourth resistor. Further, the resistor R3 is an example of a fifth resistor.

The connector 10 has a resistor R1. The resistor R1 is provided between the ground line PE and the second control line Pr. The opposite side of the connector 10 to the charging cable A31 is connected to the on-vehicle charger 8. Specifically, as illustrated in FIG. 2, the connector 10 is connected to the on-vehicle charger 8 by the power supply line L on the non-ground side, the power supply line N on the ground side, and the ground line PE. Further, the connector 10 is connected to the control circuit 80 of the on-vehicle charger 8 by the first control line CP and the second control line Pr.

The control circuit 80 performs, based further on the current values flowing through the first control line CP and the second control line Pr, control to implement a control function and a safety function such as checking the connection between the power supply source B and the vehicle C via the charging cable A31, determining the charging current, starting charging, detecting electric leakage during charging, and ending charging. For example, the control circuit 80 detects electric leakage based further on the current values flowing through the first control line CP and the second control line Pr, and when the electric leakage is detected, controls the AC relay 81 to cut off the electric circuit between the charging coupler 16 and the battery 6.

Note that the conversion adapter D1 may not have a resistor R4. For example, in the conversion adapter D1, the first control line CP may be short-circuited to the ground line PE. Further, in the conversion adapter D1, the first control line CP may be opened without being connected to the power supply line L on the non-ground side, the power supply line N on the ground side, the ground line PE, or the like, for example. The opening of the first control line CP in the conversion adapter D1 corresponds to the case where the resistance value of the resistor R4 is infinitely large. In this way, the limit value of the charging current by the control circuit 80 can be changed by the size of the resistor R4 or the presence or absence of the resistor R4.

Note that the second embodiment illustrates the conversion adapter D1 formed to be detachably attached to the charging cable A31 and the power supply source B, but it is not limited thereto. The conversion adapter D1 may be fixed to the charging cable A31 or the power supply source B to be integrally formed.

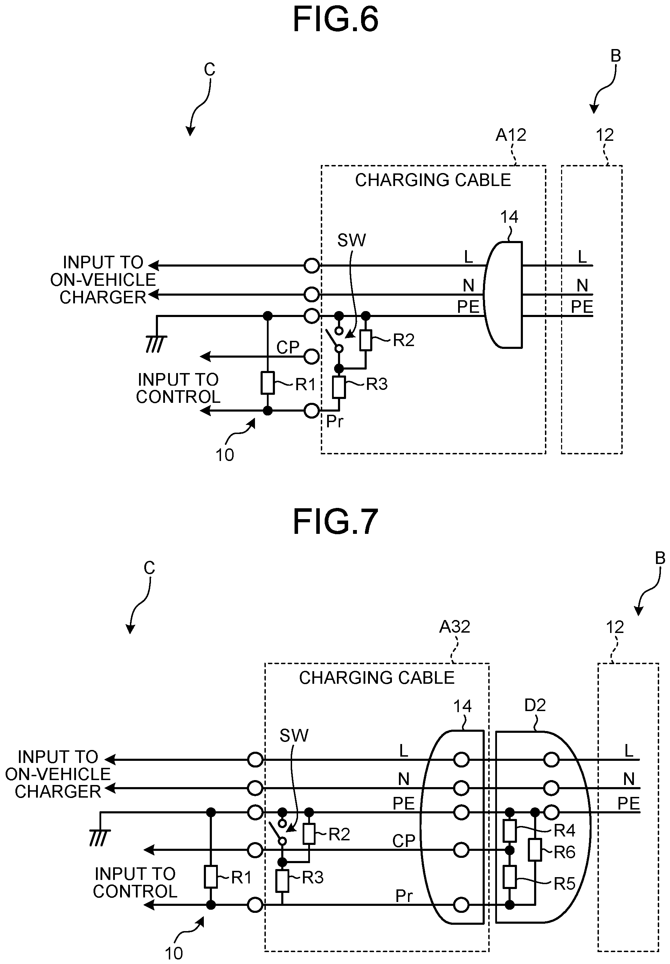

FIG. 6 is a diagram for explaining a case where a dedicated charging cable A12 is used, unlike the charging system 1 according to the embodiment. In the case where the conversion adapter D1 according to the embodiment is not used, it is required to develop a dedicated charging cable having one end to be connected to the power supply source B by the power supply line L on the non-ground side, the power supply line N on the ground side, and the ground line PE, and having the other end to be connected to the connector 10 by the power supply line L on the non-ground side, the power supply line N on the ground side, the ground line PE, the first control line CP, and the second control line Pr, as in the charging cable A12 in FIG. 6.

Under the circumstances, in the charging system 1 according to the embodiment, when the power supply source B for Mode 1 charging such as a commercial power source is used, the power supply source B and the vehicle C can be connected by attaching the conversion adapter D1 to the charging cable A31 for Mode 3 charging. On the other hand, when the power supply source B for Mode 3 charging is used, the power supply source B and the vehicle C can be connected only by the charging cable A31 for Mode 3 charging without using the conversion adapter D1.

Herewith, the same control function and safety function as in the case of Mode 2 charging and Mode 3 charging can be implemented without preparing the charging cable A2 for Mode 2 charging in accordance with the power supply source B. Further, since the charging cable A2 for Mode 2 charging is not required, the cost and man-hours for developing the charging cable A2 for Mode 2 charging can be reduced. Specifically, in the case where charging cables for Mode 2 charging and Mode 3 charging are developed, it is required to conduct seven tests on each of the charging cables: EMC-CISPR 12, EMC-CISPR 16, lightning surge, radiation immunity, voltage fluctuation/flicker, EFTB, and harmonic emissions. On the other hand, when the conversion adapter D1 according to the embodiment is used, the above-mentioned seven tests may be conducted only for Mode 3 charging.

Further, since the charging cable A2 for Mode 2 charging is not required, the user does not need to purchase the charging cables for Mode 2 charging and Mode 3 charging. In other words, the burden of the user's purchase cost can be reduced.

Further, since the conversion adapter D1 may be used appropriately in accordance with the power supply source B, the user can perform Mode 3 charging at a place where the user has gone to, and can perform Mode 1 charging using a commercial power source without installation work for Mode 3 charging at home.

### Third Embodiment

The charging system 1 according to the third embodiment will be described below. Differences from the second embodiment will be mainly described below, and descriptions of overlapping parts will be omitted as appropriate.

The present embodiment illustrates, as an example, the charging system 1 using a charging cable A32 for Mode 3 charging instead of the charging cable A31 as the charging cable A.

FIG. 7 is a diagram illustrating an example of the configuration of a conversion adapter D2 according to the present embodiment, which is another example of the configuration of the conversion adapter D1 according to the first embodiment. The charging system 1 further includes the conversion adapter D2 instead of the conversion adapter D1.

The conversion adapter D2 has a resistor R5 and a resistor R6. The resistor R5 is connected to the first control line CP. The resistor R6 is connected to the ground line PE. Here, the resistor R5 is an example of a second resistor. Further, the resistor R6 is an example of a third resistor.

The other end of the conversion adapter D2 is connected to the charging cable A32 by the power supply line L on the non-ground side, the power supply line N on the ground side, the ground line PE, the first control line CP, and the second control line Pr. Here the second control line Pr is connected to the first control line CP via the resistor R5. The second control line Pr is connected to the ground line PE via the resistor R6.

Unlike the charging cable A31 according to the first embodiment, the charging cable A32 has the second control line Pr extended to the power plug 14.

Note that the conversion adapter D2 may not have a resistor R5. For example, in the conversion adapter D2, the second control line Pr may be short-circuited to the first control line CP.

Note that the conversion adapter D2 may not have a resistor R6. For example, in the conversion adapter D2, the second control line Pr may be short-circuited to the ground line PE.

Note that the conversion adapter D2 may not have resistors R5 and R6. In the conversion adapter D2, the second control line Pr may be opened without being connected to the power supply line L on the non-ground side, the power supply line N on the ground side, the ground line PE, the first control line CP, and the like, for example.

Note that the third embodiment illustrates the conversion adapter D2 formed to be detachably attached to each of the charging cable A32 and the power supply source B, but it is not limited thereto. The conversion adapter D2 may be integrally formed by being fixed to the charging cable A32 or the power supply source B.

Even in such a configuration, the same effect as in the second embodiment can be obtained.

Note that each of the above-described embodiments illustrates, as an example, the case where the charging cable A is not fixed to either the power supply source B or the vehicle C (Case B), but it is not limited thereto. The technique according to each of the embodiments can be applied to even the case where the charging cable A is fixed to the vehicle C (Case A) or the case where the charging cable A is fixed to the power supply source B (Case C).

Note that the technique according to the first embodiment can be combined with the technique according to the second embodiment or the third embodiment as appropriate.

According to at least one embodiment described above, the safety in charging the on-vehicle battery can be improved.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A vehicle comprising:
a battery;
a traveling motor driven by power from the battery; and
an on-vehicle charger having a safety component including an opening and closing circuit and a control circuit, the opening and closing circuit opening and closing an electric circuit between a power supply source and the battery, the control circuit cutting off the electric circuit by the opening and closing circuit when electric leakage is detected by monitoring a current flowing through the electric circuit, the on-vehicle charger charging the battery using power supplied from the power supply source via a charging cable.

2. The vehicle according to claim 1, wherein the on-vehicle charger further has a noise countermeasure component that reduces electromagnetic noise from the control circuit to the power supply source.

3. A conversion adapter comprising:
a power supply line on a non-ground side;
a power supply line on a ground side;
a ground line; and
a first control line, wherein
the conversion adapter has
one end to be connected to a power supply source by the power supply line on the non-ground side, the power supply line on the ground side, and the ground line, and
a second end to be connected to a charging cable that supplies power from the power supply source to a vehicle on which a battery is mounted, by the power supply line on the non-ground side, the power supply line on the ground side, the ground line, and the first control line.

4. The conversion adapter according to claim 3, further comprising a first resistor connected to the ground line, wherein
the first control line is connected to the ground line via the first resistor.

5. The conversion adapter according to claim 3, wherein the first control line is short-circuited to the ground line.

6. The conversion adapter according to claim 3, wherein the first control line is opened.

7. The conversion adapter according to any one of claims 3 to 6, further comprising a second control line, wherein
the second end is connected to the charging cable further by the second control line.

8. The conversion adapter according to claim 7, further comprising a second resistor connected to the first control line, wherein
the second control line is connected to the first control line via the second resistor.

9. The conversion adapter according to claim 7 or 8, further comprising a third resistor connected to the ground line, wherein
the second control line is connected to the ground line via the third resistor.

10. The conversion adapter according to claim 7, wherein the second control line is short-circuited to the ground line.

11. The conversion adapter according to any one of claims 3 to 10, wherein
the one end is formed to be detachably attached to the power supply source, and
the second end is formed to be detachably attached to the charging cable.

12. A charging system comprising:
a vehicle;
a conversion adapter; and
a charging cable,
the vehicle comprising:
a battery;
a traveling motor driven by power from the battery; and
an on-vehicle charger having a safety component including an opening and closing circuit and a control circuit, the opening and closing circuit opening and closing an electric circuit between a power supply source and the battery, the control circuit cutting off the electric circuit by the opening and closing circuit when electric leakage is detected by monitoring a current flowing through the electric circuit, the on-vehicle charger charging the battery using power supplied from the power supply source via the charging cable,
the conversion adapter comprising:
a power supply line on a non-ground side;
a power supply line on a ground side;
a ground line;
a first resistor connected to the ground line; and
a first control line connected to the ground line via the first resistor,
the conversion adapter having:
one end connected to the power supply source by the power supply line on the non-ground side, the power supply line on the ground side, and the ground line; and
a second end connected to the charging cable by the power supply line on the non-ground side, the power supply line on the ground side, the ground line, and the first control line,
the charging cable supplying power supplied from the power supply source via the conversion adapter to the on-vehicle charger.

13. The charging system according to claim 12, wherein
the power supply source is a commercial power source,
the charging cable supplies the power supplied from the commercial power source to the on-vehicle charger, and
the charging cable is not provided with an opening and closing circuit that opens and closes an electric circuit between the commercial power source and the on-vehicle charger.
